# EUROPEAN PATENT APPLICATION

(11) **EP 2 840 694 A1**
(43) Date of publication of application: **25.02.2015**
(21) Application number: 13368024.9
(22) Date of filing: 20.08.2013
(51) Int. Cl.: H02M 3/07

(54) **Multiple level charge pump generating four voltages with four distinctive levels, and method for the same**

(71) Applicant: STMICROELECTRONICS S.A., 92120 Montrouge (FR)
(72) Inventor: Chevalier, Laurent, 38360 Sassenage (FR)
(74) Representative: Casalonga

(57) **Abstract**

A multi level charge pump circuit configured to be associated with at least two power supplies Vdd1 and Vdd2, and which provides four levels of positive andn negative voltage. The circuit includes first and second fly capacitors (32, 33) and first and second tank capacitor (31,34). PMOS transistors 101, 102, 111, 112 and 125 as NMOS transistors 122, 123, 124, 121 and 126 allow the generation of two high voltage levels and two low voltage levels for the charge pump, those low voltage levels being derived from a charging of a series of the two fly capacitors. The circuit is particularly useful for embodying an audio device within a platform which does not incorporate any dedicated SMPS circuit.

## Description

### Technical field

The invention relates to the field of electronic circuits and more particularly to a Switched Mode Power Supply circuit comprising a multiple output charge pump providing four different output levels of positive and negative voltages.

### Background Art

The development of portable electronic equipments in general, and mobile phones in particular, has revealed a significant interest for the use of Switched Mode Power Supply (SMPS).

Indeed, such SMPS system, in contrary to linear regulators, achieves a high efficiency - of the order of 90 or 95% - which is well beyond what is allowed by linear voltage regulator and therefore, electronic products manufacturer tend to generalize their use in a wide variety of portable devices, including mobile phones, MP3 players, Portable Device Assistant etc...

Considering, for instance, the particular case of mobile phones, those device tend to incorporate many multimedia functions, including specific audio capabilities. A mobile phone is now likely to serve as a MP3 player and thus incorporates an audio amplifier which, for the purpose of saving the battery life, is preferably based on class AB or even class G using an voltage supply which is adjusted in accordance to the level of the audio signal to amplify.

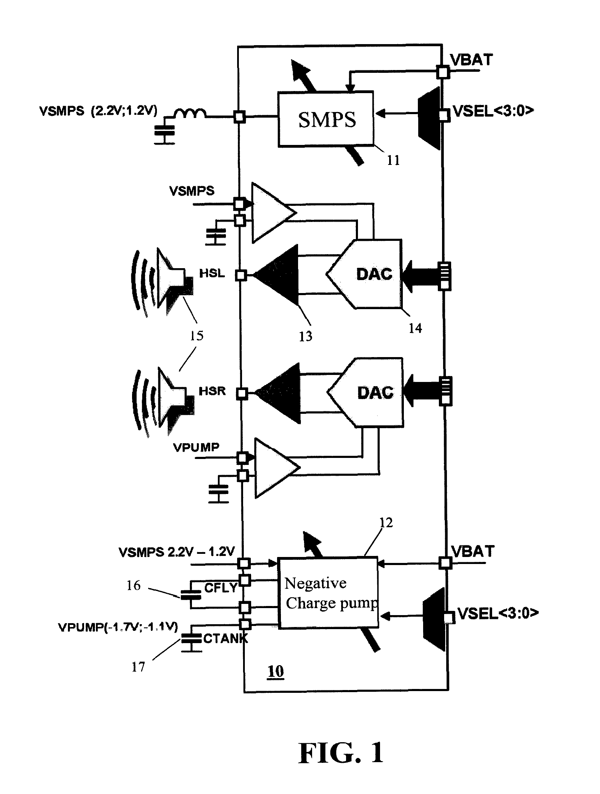

Figure 1 illustrates the schematical view of such an audio device 10 intended to drive a headset 15 comprising two drivers by means of specific stereo AB class power amplifier 13 . Power amplifier 13 receives analog signals which are converted by means of DAC 14 converting into analog form the digital audio files stored within memory (not illustrated). The powering of the class AB amplifier is achieved by means of the combination of a dedicated SMPS unit 11 providing the positive voltage, and for example a voltage between 2.2V and 1.2V in accordance with the amplitude of the analog audio signal to be amplified. In addition, a negative charge pump 12 - combined with an appropriated fly capacitor 16 and tank capacitor 17 provides the negative voltage.

Such conventional structure achieves, thanks to the combination of the SMPS 11 and the negative charge pump 12, a very high efficiency on the whole range of amplitude on the audio signal. Indeed, the envelope detection of the audio signal gives the right code for the control bits (VSEL<3:0>) to adjust the both SMPS and Negative Charge pump output voltages according the audio signal.

Such first conventional system achieves the possibility of creating a true H CLASS supply modulation with several levels with a real gain of efficiency on all levels. The clear drawback of such system results from the fact that it requires a dedicated SMPS unit, requiring a dedicated - expensive coil - in additional to the additional area required on the semiconductor substrate.

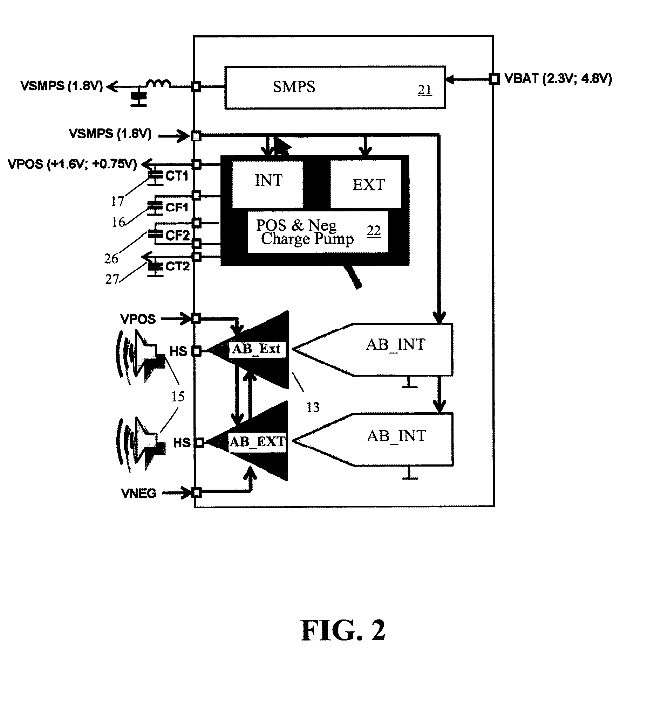

A second solution is known from US 13/816,349 filed by the Applicant of the present invention, entitled "Dual output charge pump generating two voltage values with two distinctive levels and control method thereof" and which is represented in figure 2. This second solution allows to get rid of the costly *dedicated* SMPS device of figure 1 by using a generic SMPS device already present in the chip or in the platform (for instance a specific SMPS powering Input/output interfaces with a fixed voltage of 1.8 Volt). Thanks to a dual output charge pump (positive and negative), using a second fly capacitor, there is achieved the possibility of generating two levels of positive voltages (VDD and VDD/2) and corresponding two levels of negative voltages (-VDD and -VDD/2).

Figure 2 illustrates the schematical view of an audio device which would implement the second solution known from US 13/816,349. For the sake of conciseness, the elements which are common with those of figure 1 bear the same numerals references (headset 13, amplifier 13, fly and tank capacitor 16 and 17). One sees the SMPS circuit 21 providing a fixed output voltage (1.8V for instance), which voltage is used for powering a dual positive and negative charge pump 22 associated with two fly capacitors , respectively 16 and 26, and two tank capacitors, respectively 17 and 27.

The second known solution depicted in figure 2 achieves the possibility to provide two voltage levels (±1.6V/±0.75V) and thus a true G- Class system, without using dedicated SMPS and thus reducing the manufacturing costs.

However, it is still desirable to provide better efficiency and performance, which are provided by having a multi-level class audio amplifier (Class H) without requiring any specific dedicated SMPS system.

Such is the aim of the present invention.

### Summary of the invention

It is an object of the present invention to provide a SMPS voltage supply circuit which advantageously combines great efficiency and versatility for allowing the supply of a specific Class H audio amplifier.

It is another object of the present invention to provide a SMPS voltage supply system which includes a dual voltage charge pump allowing four different levels of positive and negative voltages, useful for embodying an H class audio amplifier.

It is a further object of the present invention to provide a low cost audio device which can be used in any generic platform and which can be powered by the existing SMPS power unit.

It is still a further object of the present invention to provide a low cost telephone mobile which includes an audio device with audio amplifiers which can be powered without requiring a specific SMPS circuit.

These and other objects of the invention are achieved by means of a multi level charge pump circuit for generating multiple positive and negative voltage levels with very high efficiency which comprises a dual output charge pump having positive and negative outputs respectively coupled to first and second tank capacitors and which further comprises:
- a first fly capacitor serving for a transfer of charge into a first capacity coupled to the negative output;
- a second fly capacitor serving for charge transfer to a second capacity coupled to the positive output;
- a set of switches for connecting said first and second fly capacitors in series or not and for performing charge transfer from the power supply into said first and second fly capacitors, and for further performing adequate charge transfer to said first and second tank capacitors for generating positive and negative voltage levels;

The multi level charge pump circuit is **characterized in that** the dual output charge pump is configured to be associated with at least a first and a second power supply (Vdd1, Vdd2) , and in that it further includes a set of switches for performing adequate charge transfer for generating at least four positive voltage levels (Vdd1, Vdd2, Vdd1/1 and Vdd2/2) and four negative voltages (-Vdd1, -Vdd2, -Vdd1/1 and - Vdd2/2)

Preferably, the first and a second power supply (Vdd1, Vdd2) are generated by Switched Mode Power Supply (SMPS) generating fixed voltages (Vdd1, Vdd2).

In one embodiment, the first fly capacitor has a first end and a second end;
- the second fly capacitor has a first and a second end connected to ground;
- the first tank capacitor has a first and a second end, said second end being connected to ground;
- the second tank capacitor has a first and a second end, said second end being connected to ground;
and the multi level charge pump further comprises:
- a first PMOS transistor having a source, a drain and a gate terminal, the source of said first PMOS transistor being connected to the first power supply (Vdd1), the drain of the first PMOS transistor being connected to a first end of said first fly capacitor and the gate terminal for receiving a first control signal (NPH1L);
- a second PMOS transistor having a source, a drain and a gate terminal, the source of the second PMOS transistor being connected to the second power supply (Vdd2), the drain of the second PMOS transistor being connected to the first end of the first fly capacitor and the gate terminal for receiving a second control signal (NPH2L);
- a first NMOS transistor having a source, a drain and a gate terminal, the source of the first NMOS transistor being connected to ground, the drain of the first NMOS transistor being connected to the first end of the first fly capacitor and the gate of the first NMOS transistor for receiving a third control signal (NPH2L);
- a second NMOS transistor having a source, a drain and a gate terminal, the source of the second NMOS transistor being connected to ground and the drain of the second NMOS transistor being connected to the second end of the first fly capacitor, the gate terminal for receiving a fourth control signal (NPH1H);
- a third NMOS transistor having a source, a drain and a gate terminal, the source of the third NMOS transistor being connected to the second end of the first fly capacity and the drain of the third NMOS transistor being connected to the first end of the first tank capacitor coupled in parallel to a load, and the gate of the third NMOS transistor for receiving a fifth control signal (NPH2H);
- a fourth NMOS transistor having a source, a drain and a gate terminal, the source of the fourth NMOS transistor being connected to the second end of the first fly capacitor and the drain of the fourth NMOS transistor being connected to the first end of the second fly capacitor and the gate for receiving a sixth control signal (PPS2L);
- a third PMOS transistor having a source, a drain and a gate terminal, the source of the third PMOS transistor being connected to the first power supply (Vdd1), the drain of the third PMOS transistor being connected to a first end of the second tank capacitor and the gate terminal for receiving a seventh control signal (PPH1L);
- a fourth PMOS transistor having a source, a drain and a gate terminal, the source of the fourth PMOS transistor being connected to the second power supply (Vdd2), the drain of the fourth PMOS transistor being connected to the first end of the second tank capacitor and the gate terminal for receiving an eighth control signal (PPH2L);
- a fifth PMOS transistor having a source, a drain and a gate terminal, the source of the fifth PMOS transistor being connected to the first end of the second fly capacitor and the drain of the fifth PMOS transistor being connected to the first end of the second tank capacitor (34) coupled in parallel to the load (151), and the gate of the fifth PMOS transistor for receiving a ninth control signal (PPH3L);

Preferably the multi level charge pump circuit a control circuit for the purpose of generating the first, second, third, fourth, fifth, sixth, seventh, eighth and ninth control signal for the purpose of generating a first (Vdd1), a second (Vdd2), a third (Vdd1/2) , a fourth (Vdd2/2), a fifth (-Vdd2/2), a sixth (-Vdd1/2), a seventh (-Vdd2) and an eighth (-Vdd1) voltage values comprising four positive and negative voltages.

In one embodiment, the multi level charge pump circuit is adapted for powering a H Class audio device.

More particularly, the multi level charge pump circuit is used for a mobile telephone incorporating audio features.

The invention also provides a method for operating the multi level charge pump circuit wherein the first (Vdd1) and eighth (-Vdd1) voltages are generated by means of the following steps:
regarding the positive part of the multi voltage charge pump, by switching ON the third PMOS transistor so that the first voltage (Vdd1) is coupled to the first end of tank capacitor; and
regarding the negative part of the multi level voltage charge pump:
   - in a first phase, by switching ON the first PMOS transistor and the second NMOS transistor for the purpose of charging the first fly capacitor; and
   - in a second phase, by switching OFF the first PMOS transistor and the second NMOS transistor and by switching ON the first NMOS transistor and the third NMOS transistor so as to draw current to the ground.

In one embodiment, the second (Vdd2) and seventh (-Vdd/2) voltages are generated by means of the following steps:
regarding the positive part of the multi voltage charge pump, by switching ON the fourth PMOS transistor so that the second voltage (Vdd2) is coupled to the first end of the second tank capacitor (34); and
regarding the negative part of the multi level voltage charge pump:
   - in a first phase, by switching ON the second PMOS transistor and the second NMOS transistor for the purpose of charging the first fly capacitor; and
   - in a second phase, by switching OFF the first PMOS transistor and the second NMOS transistor and by switching ON the first NMOS transistor and the third NMOS transistor so as to draw current to the ground.

More particularly, the third (Vdd1/2) and sixth (-Vdd1/2) voltages are generated by means of the following steps:
in a first phase, by switching ON the first PMOS transistor and the fourth NMOS transistor while all other transistors are switched OFF, so as to establish a connection in series of the two fly capacitors between the first supply voltage (Vdd1) and the ground;
in a second phase, by switching ON :
   - for the positive part, the fifth PMOS transistor so as to perform a charge transfer of the second fly capacitor into the second tank capacitor; and
   - for the negative part, the fist NMOS transistor and the third NMOS transistor so as to achieve a charge transfer from the first fly capacitor into the first tank capacitor.

In one embodiment, the fourth (Vdd2) and fifth (-Vdd2) voltages are generated by means of the following steps:
in a first phase, by switching ON the second PMOS and the fourth NMOS transistor while all other transistors are switched OFF, so as to establish a connection in series of the two fly capacitors between the second supply voltage (Vdd2) and the ground;
in a second phase, by switching ON :
   - for the positive part, the fifth PMOS transistor so as to perform a charge transfer of the second fly capacitor into the second tank capacitor ; and
   - for the negative part, the first NMOS transistor and the third NMOS transistor so as to achieve a charge transfer from the first fly capacitor into the first tank capacitor .

In one embodiment, the multi level charge pump is used for a telephone mobile including an audio system.

Preferably, the multi level charge pump circuit further comprises a DAC for converting a digital audio file into analog signals, an audio amplifier powered in class H by means of the multi-level charge pump, the playing of the audio file being delayed by a processor which performs processing of the audio file for the purpose of generating the first, second, third, fourth, fifth, sixth, seventh, eighth and ninth control signal for the purpose of generating a series of four positive and negative voltages.

Finally, the invention also achieves a multilevel negative charge pump circuit which comprises:
- a fly capacitor having a first end and a second end;
- a tank capacitor having a first and a second end, the second end being connected to ground;
- a first PMOS transistor having a source, a drain and a gate terminal, the source of the first PMOS transistor being connected to the first power supply (Vdd1), the drain of the first PMOS transistor being connected to a first end of the fly capacitor and the gate terminal for receiving a first control signal (NPH1L);
- a second PMOS transistor having a source, a drain and a gate terminal, the source of the second PMOS transistor being connected to the second power supply (Vdd2), the drain of the second PMOS transistor being connected to the first end of the fly capacitor (32) and the gate terminal for receiving a second control signal (NPH2L);
- a first NMOS transistor having a source, a drain and a gate terminal, the source of the first NMOS transistor being connected to ground, the drain of the first NMOS transistor being connected to the first end of the fly capacitor and the gate of the first NMOS transistor for receiving a third control signal (NPH2L);
- a second NMOS transistor having a source, a drain and a gate terminal, the source of the second NMOS transistor being connected to ground and the drain of the second NMOS transistor being connected to the second end of the fly capacitor, the gate terminal for receiving a fourth control signal (NPH1H);
- a third NMOS transistor having a source, a drain and a gate terminal, the source of the third NMOS transistor being connected to the second end of the fly capacitor and the drain of the third NMOS transistor being connected to the first end of the tank capacitor coupled in parallel to a load, and the gate of the third NMOS transistor for receiving a fifth control signal (NPH2H).

Such arrangement allows the generation of different negative voltage levels by successive charge transfer from either the first power supply (Vdd1) or the second power supply (Vdd2) into the fly capacitor (32), then followed by a corresponding transfer of charge into the tank capacitor (31).

### Description of the drawings

Other features of one or more embodiments of the invention will appear from the following description of embodiments of the invention, with reference being made to the accompanying drawings.
Figure 1 illustrates the schematical view of a first prior art system based on the use of a dedicated SMPS unit.
Figure 2 illustrates a second known technique which can take advantage of an existing SMPS unit for the purpose of creating a G Class audio amplifier.
Figure 3 illustrates the general architecture of one embodiment.
Figure 4 illustrates one preferred embodiment of the circuit achieving four distinctive positive and negative voltages for the purpose of creating a H class audio amplifier.
Figure 5 illustrates the operating of the circuit of figure 4 for the purpose of generating the two higher voltages.
Figure 6 illustrates the operating of the circuit of figure 4 for the purpose of generating the two lower voltages .
Figure 7 illustrates one particular embodiment of a multi level charge pump circuit which can be used for generating negative voltage only.

### Description of the preferred embodiment

There will now be described particular embodiments of an audio device, for instance for a mobile telephone platform, which can incorporate an efficient audio device which does not require any specific dedicated SMPS circuit. With the possibility of achieving a true H Class audio amplifier with minimum additional costs.

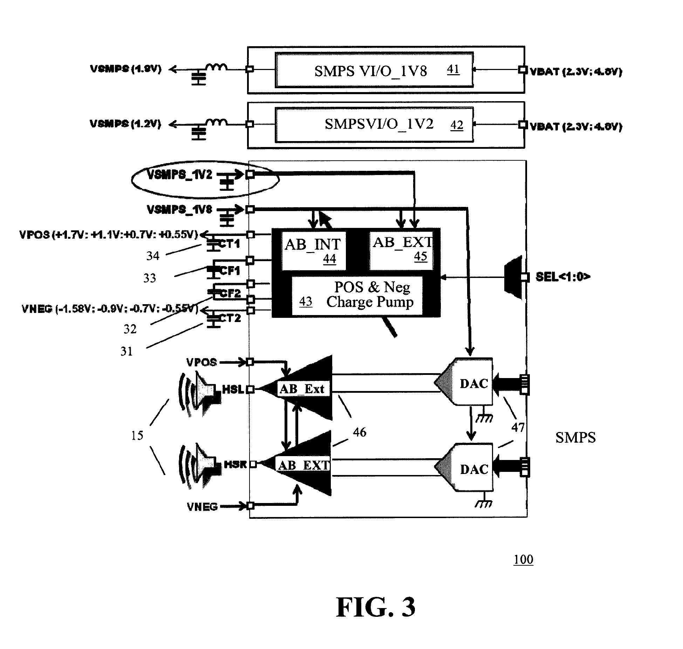

Figure 3 illustrates one preferred embodiment of a device 100 which is powered by a power supply voltage VBAT (between 2.3V and 4.8V in accordance with the status of the battery (not shown). For the sake of illustration, device 100 is assumed to include two conventional SMPS circuits 41 and 42, which are associated with appropriate external components, ie coil and capacitor, for the purpose of generating a fixed output voltage, e.g. 1.8 Volts or 1.2. Volts according to the case.

SMPS circuits 41 and 42 may be embodied by means of any known SMPS circuit well known to a skilled man and such circuit will not be further elaborated on.

Furthermore, one could arrange more than two SMPS circuits so as to produce a higher number of fixed output voltages. For the sake of illustration, one will particularly consider the case of two specific SMPS circuits 41 and 42, resp. SMPS VI/O_1V8 and SMPS VI/O_1.2V), which are assumed to provide two respective voltages (1.8V; 1.2V) used for powering some dedicated Input/output interfaces.

Device 100 is arranged to offer specific audio capabilities and connections to two loudspeakers or to a headset 15. For that purpose, device 100 comprises specific audio circuits, e.g. a AB class audio amplifier embodied by internal block 44 (AS_INT) and external blocks 45-46 (AB_EXT), the audio amplifier being arranged to drive first and second loudspeakers 15, or a headset in accordance with analog signals generated by DAC circuits 14, for instance resulting from a digital audio file stored within the memory (not represented in the figure).

The embodiment includes, in addition to the pre-existing SMPS, a dual voltage charge pump 43 which is powered by SMPS VI/O_1V8 circuit 41 and by counterpart SMPSVI/O1V2 circuit 42.

In the example being considered, and illustrated in figure 3, the dual output CHARGE_PUMP provides both modulated supply (POSITIVE and NEGATIVE) on the range ±1.7V; ±1.1V, ±0.7V and ±0.5V which are used for supplying voltage to the audio amplifier, taking into account the voltage losses existing in the MOS switches.

As known by a skilled man a charge pump is conventionally based on one capacitor - known as a "*fly* or *flying* capacitor" - which serves for the transfer of charge to one or more "*tank*" or "*reservoir*" capacitor.

In the practical embodiment of figure 3, dual voltage charge pump 43 is associated to four external capacitors, respectively a first and second *flying* or fly capacitors 32 and 33 and first and second *reservoir* or *tank* capacitors 31 and 34.

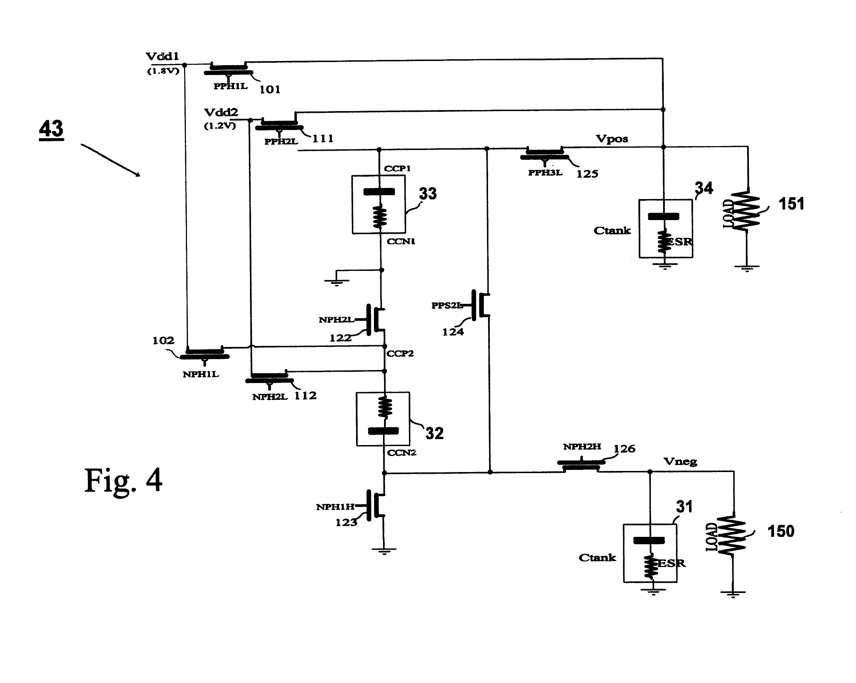

In order to maximize the amplitude of the audio signal the charge pump provides a set of two high output voltage (±1.7V; ±1.1V) on the audio amplifier with the structure below. However, in order to minimize power consumption for small audio signals, a second set of two low output voltages (±0.7V and ±0.5V) is generated by dual charge pump 12 which will now be more precisely described in reference with figure 4.

### Basic components of the negative part of the dual charge pump.

The components which are basically involved in the generation of the negative voltage supply current to load 150 will now be described first with respect to figure 4.

With respect to figure 4, one sees that charge pump 43 includes a first PMOS transistor 102 having source and drain terminals, and a gate terminal which receives a control signal NPH1L. The source of PMOS transistor 102 is connected to the first source of voltage Vdd1 generated by the first SMPS circuit (and assumed to receiver the supply voltage having the higher value) while its drain is connected to a first end (CCP2) of the first fly capacitor 32 (represented in figure 4 with its internal resistor designated by the generic name ESR) and also to the drain of a first NMOS transistor 122 which source is connected to ground. Transistor 122 has a gate terminal which receives a control signal NPH2L. Fly capacitor 32 has a second end (CCN2) which is connected to the train terminal of a second NMOS transistor 123 having its source terminal connected to the ground a gate terminal for receiving a control signal NPH1H.

Charge pump 43 comprises a third NMOS transistor 126 having source and drain terminals, and a gate receiving a control voltage NPH2H. The source of transistor 126 is connected to the second end (CCN2) of the first fly capacitor 32, while the drain of transistor 126 is connected to the first end of tank capacitor 31 (which losses are illustrated by means of a resistor in figure 4), having its other end connected to ground, and which is coupled in parallel to a negative load 150.

Charge pump 43 further includes a second PMOS transistor 112 having source and drain terminals, and a gate terminal which receives a control signal NPH2L. The source of PMOS transistor 112 is connected to the second voltage source Vdd2 generated by the second SMPS circuit (and providing the supply voltage with the lower level) while its drain is connected to first end (CCP2) of first fly capacitor 32 as well as to the drain of first NMOS transistor 122.

The components which were described above may be used for providing a charge pump providing a negative voltage only. However, for the purpose of providing positive voltage levels, additional components are combined which will now be described below.

Additional components for generating the positive voltage of the charge pump.

Charge pump 43 further includes a third PMOS transistor 101 having source and drain terminals as well as a gate terminal for receiving a control signal PPH1L. The source of PMOS transistor 101 is connected to Vdd1 (generated by SMPS VI/O_1V8 producing 1.8Volt) while its drain is connected to a first end of a second tank capacitor 34. Tank capacitor 34 (which losses are represented by a ESR resistor connected in series) has a second end which is connected to the ground. A load 151 is connected in parallel to the tank capacitor 34 which represents the current load of the audio driver.

Charge pump 43 further includes a fourth PMOS transistor 111 having source and drain terminals as well as a gate terminal for receiving a control signal PPH2L. The source of PMOS transistor 111 is connected to second voltage Vdd2 (assumed to receive the supply voltage having the lower value) generated by the second fixed SMPS (SMPS VI/O_1V2 producing 1.2Volt) while its drain is connected to the first end of tank capacitor 34.

Charge pump 43 further comprises a fourth NMOS transistor 124 which has source and drain terminals, and a gate terminal for receiving a control signal PPS2L. The source terminal of NMOS transistor 124 is connected to the second end (CCN2) of first fly capacitor 32 while the drain terminal of NMOS transistor 124 is connected to a first end of second fly capacitor 33 (which losses are illustrated by a resistor in figure 4), which second end is connected to ground.

Finally, charge pump 43 further comprises a fifth PMOS transistor 125 which has source and drain terminals, and a gate terminal for receiving a control signal PPH3L. The source terminal of PMOS transistor 125 is connected to the first end (CCP1) of second fly capacitor 33, while the drain of the same transistor is connected to the first end of tank capacitor 34.

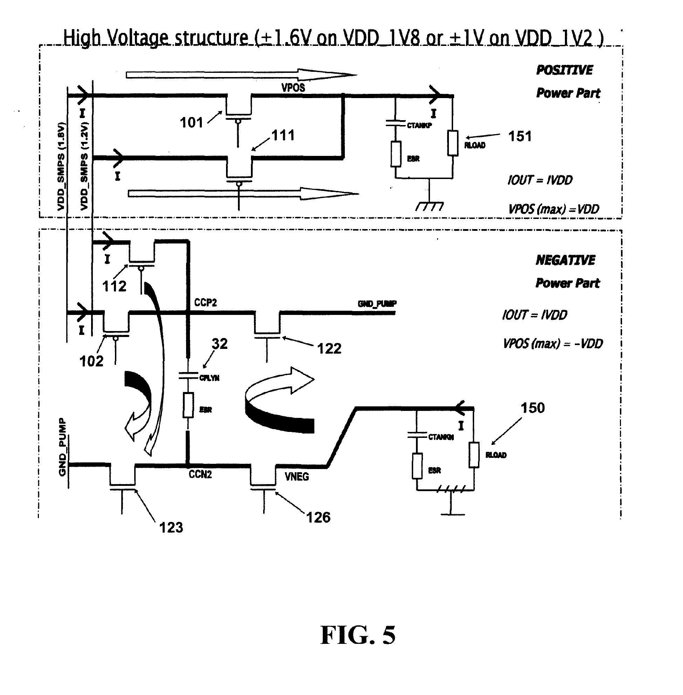

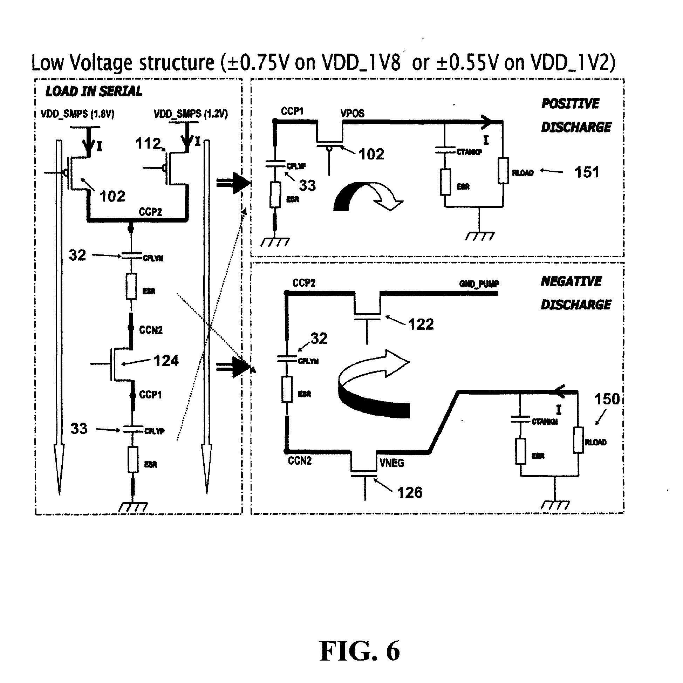

The skilled man will take notice that the circuit is capable of generating various positive Vpos and negative Vneg may be used for driving a AB class amplifier, or even a H class amplifier thanks to the possibility of generating, as will become apparent hereinafter with the subsequent drawings of figures 5 and 6, four distinctive positive and four distinctive negative voltages.

### 1. Generation of the higher voltage (in absolute value)

Charge pump 43 is arranged to provide, from the fixed positive voltage Vdd1 (assumed to have the higher voltage) generated by first SMPS (VDD_1.V8), the set of voltages ±1.7V.

To achieve this, the dual charge pump operates as follows:

Regarding the positive part of the dual voltage charge pump, one can see that PMOS transistor 101 is switched ON (while transistors 111 and 125 are switched OFF), so that the higher voltage level Vdd1 (1.8V) is being coupled to the first end of tank capacitor 34.

One sees that, taking into account the voltage drop between the drain-source terminals of the MOS transistors, the tank capacitor may be charged with a voltage of about 1.7 Volts.

Regarding the negative part of the dual charge pump, the latter works as follows: in a first phase, transistors 102 and 123 are switched ON, which results in the application of the first voltage Vdd1 (1.8V) between the first and second ends of fly capacitor 32 and, in a subsequent second phase, transistors 102 and 123 are switched OFF while transistors 122 and 126 are switched ON so as to draw current to the ground and thus generate Vneg = -1.7 Volts.

Clearly, such process is controlled by means of the application of appropriate control signals to the gate of transistors 101-102-111-125 and 122-123-126 and the generation of such control signals is well known to a skilled man and will not be further elaborated on.

### 2. Generation of the 2^{nd} higher voltage (in absolute value)

Charge pump 43 is arranged to provide, from the fixed positive voltage Vdd2 (assumed to have the lower voltage level) generated by the second SMPS (VDD_1.V2), the second higher voltage ±1.1V.

To achieve this, the dual charge pump operates as follows:

Regarding the positive part of the dual voltage charge pump, one can see that PMOS transistor 111 is switched ON (while transistors 101 and 125 are switched OFF), so that the voltage Vdd2 (1.2V) is being coupled to the first end of tank capacitor 31.

One sees that, taking into account the voltage drop between the drain-source terminals of the MOS transistors, the tank capacitor may be charged with a voltage of about 1.1 Volts.

Regarding the negative part of the dual charge pump, the latter works as follows: in a first phase, transistors 112 and 123 are switched ON, what results in the application of the second source voltage Vdd2 (1.2V) between the first and second ends of fly capacitor 32 and, in a subsequent second phase, transistors 112 and 123 are switched OFF while transistors 122 and 126 are switched ON so as to draw current to the ground and thus generate Vneg = - 1.1 Volts.

As above, the process is controlled by means of the application of appropriate control signals to the gate of transistors 101-102-111-125 and 122-123-126 and the generation of such control signals is well known to a skilled man and will not be further elaborated on.

### 3. Generation of the third voltage (in absolute value)

Charge pump 43 is arranged to provide, from the fixed positive voltage Vdd1 generated by first SMPS (VDD_1.V8), the third voltage ±0.7V

To achieve this, the dual charge pump operates as follows as illustrated in figure 6:

In a first phase, transistors 102 and 124 are switched ON while all other transistors are switched OFF, so as to establish a connection in series of the two fly capacitors 32 and 33 between Vdd1 and the ground.

Such series connection results in the fact that each fly capacitor is being charged to half the nominal value of 1.8V, that is to say approximately at 0.9V.

Then, in a subsequent second phase, all transistors are switched OFF except:
- for the positive part, transistor 125 which is switched ON so as to perform a charge transfer from fly capacitor 33 (carrying half the nominal value) to the Tank capacitor 34; and
- for the negative part, transistors 122 and 126 are switched ON so as to achieve a similar charge transfer to the tank capacitor 31.

This shows that , at the end of the second step, the tank capacitors can be charged so as to produce a low voltage of about ±0.7V.

As above, all transistors 101-102-111-125 and 122-123-126 receive the application of adequate control signals so as to achieve the sequence of phases described above.

### 4. Generation of the lowest fourth voltage (in absolute value)

Charge pump 43 is arranged to provide, from the fixed positive voltage Vdd2 generated by the second SMPS (VDD_1.V8), the lowest voltage (in absolute value) ±0.5V. This is achieved as follows:

To achieve this, the dual charge pump operates as follows as illustrated in figure 6:

In a first phase, transistor 112 and 124 are switched ON while all other transistors are switched OFF, so as to establish a connection in series of the two fly capacitors 32 and 33 between Vdd2 and the ground.

Such series connection results in the fact that each fly capacitor is being charged to half the nominal value of 1.2V, that is to say approximately at 0.6V.

Then, in a subsequent second phase, all transistors are switched OFF except:
- for the positive part, transistor 125 which is switched ON so as to perform a charge transfer (of half the nominal value) from fly capacitor 33 to the Tank capacitor 34 supplying current to the load 151; and
- for the negative part, transistors 122 and 126 are switched ON so as to achieve a similar charge transfer from fly capacitor 32 to the tank capacitor 31 supplying current to the load 150.

This shows that , at the end of the second step, the tank capacitors can be charged so as to produce a low voltage of about ±0.55V .

As above, all transistors 101-102-111-125 and 122-123-126 receive the application of adequate control signals so as to achieve the sequence of phases described above.

Consequently, the circuit which was described in figure 4 shows great flexibility since it allows to produce four distinctive voltage levels with a very low drop out and then a very high efficiency, thus achieving a true H class audio amplifier without requiring any dedicated SMPS circuit.

In particular, the generation of the different control signals applied to the gates of the transistors can be performed so as to control the generation of the low or high voltage in accordance with the actual level of an analog signal, thus achieving the voltage supply of a H class audio amplifier. In one particular embodiment, the playing of the audio file is slightly delayed so as to permit adequate signal processing and achieve the appropriate control of the set of switches 101-102-111-125 and 122-123-126 as the audio file is being played by the user.

To achieve this, there is arranged a processing of the delayed audio file by a processor for the purpose of entering into an analysis of the volume of the analog signal so as to generate the appropriate control signals for the gates of all transistors, ensuring adequate powering of the AB class audio amplifier.

The inventors have discovered that, thanks to such mechanism, it was possible to save about 3.5 mW on a typical audio file which would have normally require about 10-12 mW.

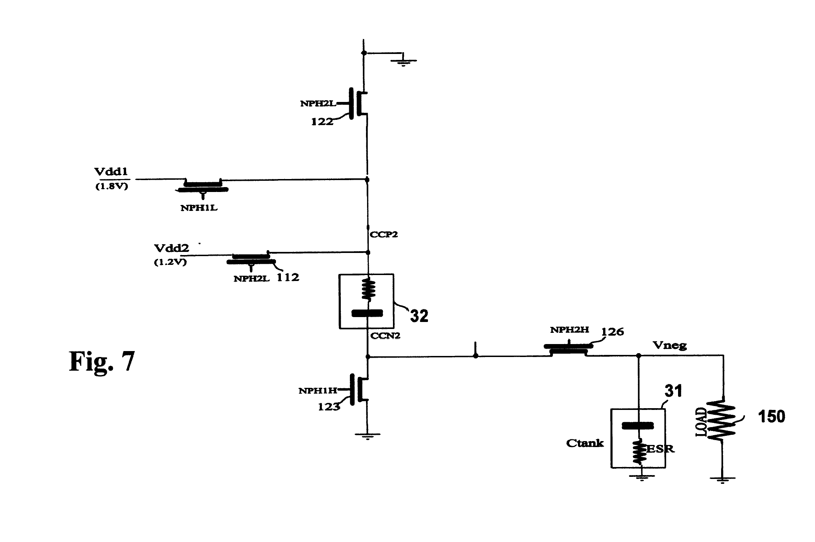

With respect to figure 7, there is now illustrated one particular embodiment of a multi level charge pump circuit which can be used for generating negative voltage only. Such embodiment is based on the particular components illustrated in figure 4 which are involved for the generation of the negative voltage only. Therefore, for the sake of clarity, the components which are common to those of figure 4 bear the same reference number.

One sees that the negative multilevel charge pump comprises one single fly capacitor 32 and one single tank capacitor 31, having one end connected to the ground.

In addition, the circuit comprises:
- the first PMOS transistor 102 which source is connected to the first power supply (Vdd1) and which drain is connected to a first end of fly capacitor 32. The gate of first PMOS transistor 102 receives first control signal (NPH1L);
- the second PMOS transistor 112 which source is connected to the second power supply (Vdd2) and which drain is connected to the first end of fly capacitor 32. The gate terminal receives the second control signal (NPH2L);
- a first NMOS transistor 122 which source terminal is connected to ground and which drain is connected to the first end of fly capacitor 32. The gate of the first NMOS transistor receives a third control signal (NPH2L);
- a second NMOS transistor 123 which source is connected to ground and which drain is connected to the second end of fly capacitor 32. The gate terminal for receives a fourth control signal (NPH1H);
- a third NMOS transistor 126 which source is connected to the second end of fly capacitor 32 and which drain is connected to the first end of the tank capacitor 31 coupled in parallel to load 150. The gate of the third NMOS transistor for receives a fifth control signal (NPH2H).

Such arrangement achieves the generation of different negative voltage levels by successive charge transfer from either the first power supply (Vdd1) or the second power supply (Vdd2) into fly capacitor 32, then followed by a corresponding transfer of charge into the tank capacitor 31.

## Claims

1. A multi level charge pump circuit for generating multiple positive and negative voltage levels, said multi level charge pump circuit comprising:
- a dual output charge pump having positive and negative outputs respectively coupled to first and second tank capacitors (31, 34); said dual output charge pump comprising:
- a first fly capacitor (32) serving for a transfer of charge into the first tank capacitor (31) coupled to the negative output;
- a second fly capacitor (33) serving for charge transfer to the second tank capacitor coupled to the positive output,
- a set of switches for connecting said first and second fly capacitors in series or not and for performing charge transfer from the power supply into said first and second fly capacitors, and for further performing adequate charge transfer to said first and second tank capacitors for generating positive and negative voltage levels;
**characterized in that** said dual output charge pump is configured to be associated with at least a first and a second power supply (Vdd1, Vdd2) respectively generating a first higher voltage (Vdd1) and a second lower voltage (Vdd2), and **in that** it further includes a set of switches for performing adequate charge transfer for generating at least four positive voltage levels (Vdd1, Vdd2, Vdd1/2 and Vdd2/2) and four negative voltages (-Vdd1, -Vdd2, -Vdd1/1 and -Vdd2/2).

2. A multi level charge pump circuit according to claim 1 **characterized in that** said first and a second power supply (Vdd1, Vdd2) are generated by Switched Mode Power Supply (SMPS) generating fixed voltages (Vdd1, Vdd2).

3. A multi level charge pump circuit according to claim 1 or 2 wherein:
- the first fly capacitor (32) has a first end and a second end;
- the second fly capacitor (33) has a first and a second end connected to ground;
- the first tank capacitor (31) has a first and a second end, said second end being connected to ground;
- the second tank capacitor (34) has a first and a second end, said second end being connected to ground;
and further comprising
- a first PMOS transistor (102) having a source, a drain and a gate terminal, said source of said first PMOS transistor being connected to the first power supply (Vdd1), said drain of said first PMOS transistor being connected to a first end of said first fly capacitor (32) and said gate terminal for receiving a first control signal (NPH1L);
- a second PMOS transistor (112) having a source, a drain and a gate terminal, said source of said second PMOS transistor being connected to the second power supply (Vdd2), said drain of said second PMOS transistor being connected to said first end of said first fly capacitor (32) and said gate terminal for receiving a second control signal (NPH2L);
- a first NMOS transistor (122) having a source, a drain and a gate terminal, said source of said first NMOS transistor being connected to ground, said drain of said first NMOS transistor being connected to said first end of said first fly capacitor (32) and said gate of said first NMOS transistor for receiving a third control signal (NPH2L);
- a second NMOS transistor (123) having a source, a drain and a gate terminal, said source of said second NMOS transistor being connected to ground and said drain of said second NMOS transistor being connected to said second end of said first fly capacitor (32), said gate terminal for receiving a fourth control signal (NPH1H);
- a third NMOS transistor (126) having a source, a drain and a gate terminal, said source of said third NMOS transistor being connected to the second end of said first fly capacity (32) and said drain of said third NMOS transistor being connected to the first end of said first tank capacitor (31) coupled in parallel to a load (150), and said gate of said third NMOS transistor for receiving a fifth control signal (NPH2H);
- a fourth NMOS transistor (124) having a source, a drain and a gate terminal, said source of said fourth NMOS transistor being connected to the second end of said first fly capacitor (32) and said drain of said fourth NMOS transistor being connected to the first end of said second fly capacitor (33) and said gate for receiving a sixth control signal (PPS2L);
- a third PMOS transistor (101) having a source, a drain and a gate terminal, said source of said third PMOS transistor being connected to the first power supply (Vdd1), said drain of said third PMOS transistor being connected to a first end of said second tank capacitor (34) and said gate terminal for receiving a seventh control signal (PPH1L);
- a fourth PMOS transistor (111) having a source, a drain and a gate terminal, said source of said fourth PMOS transistor being connected to the second power supply (Vdd2), said drain of said fourth PMOS transistor being connected to said first end of said second tank capacitor (34 and said gate terminal for receiving an eighth control signal (PPH2L);
- a fifth PMOS transistor (125) having a source, a drain and a gate terminal, said source of said fifth PMOS transistor being connected to the first end of said second fly capacitor (32) and said drain of said fifth PMOS transistor being connected to the first end of said second tank capacitor (34) coupled in parallel to the load (151), and said gate of said fifth PMOS transistor for receiving a ninth control signal (PPH3L);

4. The multi level charge pump circuit according to claim 3 **characterized in that** it comprises a control circuit for the purpose of generating said first, second, third, fourth, fifth, sixth, seventh, eighth and ninth control signal for the purpose of generating a first (Vdd1), a second (Vdd2), a third (Vdd1/2) , a fourth (Vdd2/2), a fifth (-Vdd2/2), a sixth (-Vdd1/2), a seventh (-Vdd2) and an eighth (-Vdd1) voltage values comprising four positive and negative voltages.

5. The multi level charge pump circuit according to claim 3 or 4 **characterized in that** it is used for powering a H Class audio device.

6. The multi level charge pump circuit according to claim 3 or 4 **characterized in that** it is used for a mobile telephone incorporating audio features.

7. Method for operating the multi level charge pump circuit according to claim 4, **characterized in that** said first (Vdd1) and eighth (-Vdd1) voltages are generated by means of the following steps:
regarding the positive part of the multi voltage charge pump, by switching ON said third PMOS transistor (101) so that said first voltage (Vdd1) is coupled to the first end of tank capacitor (34); and
regarding the negative part of the multi level voltage charge pump:
- in a first phase, by switching ON said first PMOS transistor (102) and said second NMOS transistor (123) for the purpose of charging said first fly capacitor (32); and
- in a second phase, by switching OFF said first PMOS transistor (102) and said second NMOS transistor (123) and by switching ON said first NMOS transistor (122) and said third NMOS transistor (126) so as to draw current to the ground.

8. Method for operating the multi level charge pump circuit according to claim 4, **characterized in that** said second (Vdd2) and seventh (-Vdd/2) voltages are generated by means of the following steps:
regarding the positive part of the multi voltage charge pump, by switching ON said fourth PMOS transistor (111) so that said second voltage (Vdd2) is coupled to the first end of tank capacitor (31); and
regarding the negative part of the multi level voltage charge pump:
- in a first phase, by switching ON said second PMOS transistor (112) and said second NMOS transistor (123) for the purpose of charging said first fly capacitor (32); and
- in a second phase, by switching OFF said first PMOS transistor (102) and said second NMOS transistor (123) and by switching ON said by first NMOS transistor (122) and said third NMOS transistor (126) so as to draw current to the ground.

9. Method for operating the multi level charge pump circuit according to claims 4, **characterized in that** said third (Vdd1/2) and said sixth (-Vdd1/2) voltages are generated by means of the following steps:
in a first phase, by switching ON said first PMOS transistor (102) and said fourth NMOS transistor (124) while all other transistors are switched OFF, so as to establish a connection in series of the two fly capacitors (32, 33) between said first voltage (Vdd1) and the ground;
in a second phase, by switching ON :
- for the positive part, said fifth PMOS transistor (125) so as to perform a charge transfer of said second fly capacitor (33) into said second tank capacitor (34); and
- for the negative part, said first NMOS transistor (122) and said third NMOS transistor (126) so as to achieve a charge transfer from said first fly capacitor (32) into said first tank capacitor (31).

10. Method for operating the multi level charge pump circuit according to claims 3 to 6, **characterized in that** said fourth (Vdd2) and fifth (-Vdd2) voltages are generated by means of the following steps:
in a first phase, by switching ON said second PMOS (112) and said fourth NMOS transistor (124) while all other transistors are switched OFF, so as to establish a connection in series of the two fly capacitors (32, 33) between said second voltage (Vdd2) and the ground;
in a second phase, by switching ON :
- for the positive part, said fifth PMOS transistor (125) so as to perform a charge transfer of said second fly capacitor (33) into said second tank capacitor (34); and
- for the negative part, said first NMOS transistor (122) and said third NMOS transistor (126) so as to achieve a charge transfer from said first fly capacitor (32) into said first tank capacitor (31).

11. Method according anyone of claims 7 to 10 **characterized in that** it is used for a telephone mobile including an audio system.

12. Telephone mobile comprising a multi level charge pump circuit as defined in claims 1 to 6, further comprising a DAC for converting a digital audio file into analog signals, an audio amplifier powered in class H by means of said multi-level charge pump, the playing of said audio file being delayed by a processor which performs processing of said audio file for the purpose of generating said first, second, third, fourth, fifth, sixth, seventh, eighth and ninth control signal for the purpose of generating a series of four positive and negative voltages.

13. A multi level charge pump circuit for generating negative voltage levels comprising :
- a fly capacitor (32) has a first end and a second end;
- a tank capacitor (31) has a first and a second end, said second end being connected to ground;
and further comprising
- a first PMOS transistor (102) having a source, a drain and a gate terminal, said source of said first PMOS transistor being connected to the first power supply (Vdd1), said drain of said first PMOS transistor being connected to a first end of said fly capacitor (32) and said gate terminal for receiving a first control signal (NPH1L);
- a second PMOS transistor (112) having a source, a drain and a gate terminal, said source of said second PMOS transistor being connected to the second power supply (Vdd2), said drain of said second PMOS transistor being connected to said first end of said fly capacitor (32) and said gate terminal for receiving a second control signal (NPH2L);
- a first NMOS transistor (122) having a source, a drain and a gate terminal, said source of said first NMOS transistor being connected to ground, said drain of said first NMOS transistor being connected to said first end of said fly capacitor (32) and said gate of said first NMOS transistor for receiving a third control signal (NPH2L);
- a second NMOS transistor (123) having a source, a drain and a gate terminal, said source of said second NMOS transistor being connected to ground and said drain of said second NMOS transistor being connected to said second end of said fly capacitor (32), said gate terminal for receiving a fourth control signal (NPH1H);
- a third NMOS transistor (126) having a source, a drain and a gate terminal, said source of said third NMOS transistor being connected to the second end of said fly capacitor (32) and said drain of said third NMOS transistor being connected to the first end of said tank capacitor (31) coupled in parallel to a load (150), and said gate of said third NMOS transistor for receiving a fifth control signal (NPH2H);
whereby different negative voltage levels can be generated by successive charge transfer from either the first power supply (Vdd1) or the second power supply (Vdd2) into said fly capacitor (32), then followed by a corresponding transfer of charge into said tank capacitor (31).
